# EUROPEAN PATENT APPLICATION

(11) **EP 1 826 799 A1**
(43) Date of publication of application: **29.08.2007**
(21) Application number: 05816520.0
(22) Date of filing: 15.12.2005
(51) Int. Cl.: H01J 9/26, B23K 35/26, C22C 13/00, C22C 13/02, H01J 29/86, H01J 31/12

(54) **SEAL MATERIAL, IMAGE DISPLAY DEVICE USING SEAL MATERIAL, METHOD OF PRODUCING IMAGE DISPLAY DEVICE, AND IMAGE DISPLAY DEVICE PRODUCED BY THE PRODUCTION METHOD**

(30) Priority: 17.12.2004 JP 2004366465; 09.09.2005 JP 2005262556; 09.09.2005 JP 2005262557; 09.09.2005 JP 2005262558
(71) Applicant: KABUSHIKI KAISHA TOSHIBA, Tokyo 105-8001 (JP)
(72) Inventor: YAMADA, Akiyoshi, c/o I.P.D. Toshiba Corporation, Minato-ku, Tokyo 105-8001 (JP); TAKEDA, Hiromitsu, c/o I.P.D. Toshiba Corporation, Minato-ku, Tokyo 105-8001 (JP)
(74) Representative: HOFFMANN EITLE
(86) International application number: PCT/JP2005/023059
(87) International publication number: WO 2006/064880

(57) **Abstract**

There are provided two substrates 11, 12 disposed in opposite to each other with a gap and a vacuum sealing portion 31 which seals predetermined positions of the substrates and defines a sealed space between the two substrates. The vacuum sealing portion 31 has a sealing material 32 filled along a predetermined position. The sealing material includes at least one type of active metal in a base material that includes Su or at least one type of melting point lowering element of Pb, In, Bi, Zn, Ag, Au, or Cu in Sn.

## Description

### Technical Field

The present invention relates to a sealing material for use in a vacuum sealing portion for maintaining a high vacuum space sandwiched between two substrates that configure an image display device; a flat-face image display device using the sealing material ; a method for manufacturing the image display device; and an image display device manufactured by the manufacturing method.

### Background Art

In recent years, a self light emission type flat display that is becoming a dominant part of displays is equipped with two glass substrates that are basically disposed in opposite to each other, wherein a circuit for forming an image and an electron radiation or plasma forming element are incorporated in one glass substrate, and a phosphor opposed to the element is formed on the other glass substrate. These two glass substrates are disposed in opposite to each other with a proper space so that the element efficiently acts. This space requires a high degree of vacuum in an electron beam excitation type display. Therefore, the two glass substrates must be structured so as to maintain a proper space therebetween and endure a high vacuum.

For example, as shown in Jpn. Pat. Appln. KOKAI Publication No. 2002-319346, conventionally, in order to form such a structure that is capable of enduring a high vacuum, a frame body made of a glass material identical to that for the glass substrates is prepared, and this frame body is adhered by means of a glass-based adhesive along the full circumference of one glass substrate. As a result, the other glass substrate and the frame body serve as adhesive and vacuum seals using a low melting metal, such as indium or an indium alloy, having wetting property with a glass. These low melting metals show high wetting property relative to a glass when they are heated to higher than the melting point and melted, and processing can be carried out at a temperature at which no strain occurs with a glass, thus enabling sealing with high air tightness and high reliability.

However, a method for obtaining a vacuum sealing structure by using a low melting metal such as indium or an indium alloy as a sealing material, is essentially targeted for sealing of a small square area. A large-sized image display device requires sealing of a very large and long square area, thus making it difficult to obtain a vacuum sealing structure with high reliability in simple application of a conventional technique.

One of such large factors includes contraction due to a surface tension at the time of melting of the low melting metal described above. Because a surface tension of a molten metal is very large, which is equal to or greater than 10 times that of water, a force of producing a sphere becomes dominant in an environment in which no restraining force works. Therefore, even if a planar sealing line is formed of a low melting metal on a glass face, the sealing line is cut in a molten state, and then, a local rise is formed, making it impossible to serve as a vacuum seal. In particular, in a large-sized flat image display device, a length of a sealing portion exceeds 3m at its full circumference, and a probability that continuity mandatory for vacuum maintenance lacks becomes very high.

In order to restrain spherical shaping due to a surface tension of a liquid that exists on a solid surface, it is known to be preferable to weaken a boundary tension between the solid surface and the liquid by means of a Young formula. In a display device that serves as a subject matter of the present invention, a solid is a glass and a liquid is a sealing metal. Because a boundary tension between a glass and a molten metal is large, it becomes effective to provide a metal layer that lowers a boundary tension, on a glass surface. However, this technique entails a difficulty in firmly bonding a metal with a glass and a problem that an advantageous effect is lost after the metal layer has extinguished from a glass face due to reaction with a sealing metal.

On the other hand, from the viewpoint of bonding between a metal and an inorganic material (such as oxide, nitride, and carbide), a technique is employed for adding a metal element called an active metal to a so-called brazing material. This is because a metal compound of which active metal constitutes an inorganic material is reduced during heat treatment, and then, a new compound is formed, thereby generating bonding between the inorganic material and the brazing material. However, a reduction reaction required for bonding is determined by a product between a temperature and a time. Therefore, a sufficient mechanical strength cannot be obtained at a low temperature, and thus, such reduction reaction has been limited to application in a silver brazing used at a temperature exceeding 700°C. In addition, if reaction with an active metal occurs with a material of amorphous type such as a glass among oxides, there is a fact that bonding property between a reaction layer and a glass is impaired, making it impossible to substantially obtain bonding after being released from a reaction boundary.

In addition, indium (inclusive of an indium alloy) is consumed in large amount as a transparent electrode film. Thus, the further use of indium as a sealing material must be restrained from the environmental point of view.

The characteristics require for a material in place of indium are that, in addition to the fact that a primary resource is rich, there is a need for having a low melting point close to 157°C that is a melting point of indium and having a low steam pressure that is nonvolatile in baking of a panel glass that serves as a process for obtaining a high vacuum. If a metal element is selected from such a point of view, Sn essentially becomes a candidate. For example, Jpn. Pat. Appln. KOKAI Publication Nos. 11-77370 and 2004-149354 disclose a concept of using an Sn alloy as a sealing material of two glass panels.

However, the sealing material disclosed in Jpn. Pat. Appln. KOKAI Publication No. 11-77370 is limited to an Sn-Bi alloy. Using Bi with a high steam pressure does not conform to the required performance of a sealing material for obtaining a high vacuum. In addition, in Jpn. Pat. Appln. KOKAI Publication No. 2004-149354, there is disclosed a structure of discharging internal air from a predetermined position and depressurizing after soldering the periphery of two glasses with an Sn alloy. In such a structure, it is theoretically impossible to execute a baking process for obtaining a high vacuum. In other words, the Sn alloy disclosed in Jpn. Pat. Appln. KOKAI Publication No. 2004-149354 has a melting point in the vicinity of at least 232°C that is a melting point of Sn. Therefore, a molten state is established when heating is carried out at a temperature equal to or higher than 300°C that is required for a baking process. The molten Sn alloy is absorbed inside a sealing portion by means of an atmospheric pressure difference, and then, sealing property is lost.

The manufacture of a large-screen FED requiring a high degree of vacuum requires a baking process for heating two glass panels to a high temperature under a high vacuum. In this baking process, the two glass panels must be given a gap required for vacuum evacuation. Vacuum sealing is carried out through a baking process, thus making it necessary for a sealing material to be provided in advance at a predetermined position of the two glass panels. However, if Sn is used as a material to be substituted for In, an oxide film is formed on a glass surface in this process of providing the sealing material. With respect to this oxide film, it has been found that, in a process for forming a sealing portion by means of lamination of glass panels, very small vent holes are left at the sealing portion, and it is difficult to maintain a high vacuum of a product.

Although the formation of an oxide film has been observed in In as well, there has not occurred a problem with forming a sealing portion by destroying an oxide film in a process for laminating glass panels. It has been found difficult to use Sn as a sealing material due to the fact that an oxide film of Sn is very strong in comparison with an oxide film of In.

If generation of an oxide film inhibits formation of a sealing portion, it is believed to be possible to provide a sealing material in a reduction atmosphere in which no oxide film is formed and in a non-oxidization atmosphere. In order to provide Sn on a glass face, it is preferable to impart ultrasonic waves to Sn in a molten state. However, it has been found that, if ultrasonic waves are imparted while Sn is in a molten state in an atmosphere in which no oxide film is formed, Sn evaporates to very small particles, and then, there occurs a failure that proper provision of Sn on a glass face becomes difficult.

In this manner, in a conventional technique, there is a problem that, when an attempt is made to obtain a vacuum sealing structure of an image display device by using a low melting metal as a sealing material, the continuity of a sealing portion lacks due to contraction caused by a surface tension of the low melting metal, and then, it becomes difficult to maintain high vacuum sealing property. As a result, it becomes difficult to manufacture a large-sized image display device maintained at a high degree of vacuum.

### Disclosure of Invention

The present invention has been made in view of the circumstances described above. It is an object of the present invention to provide a sealing material that is capable of maintaining a high degree of vacuum, and has improved reliability; an image display device using the sealing material; a method for manufacturing the image display device; and an image display device manufactured by the manufacturing method.

In order to achieve the object, according to an aspect of the invention, there is provided a sealing material for use in a vacuum sealing portion of an image display device, comprising at least one type of active metal in a base material that includes Su or at least one type of melting point lowering element of Pb, In, Bi, Zn, Ag, Au, or Cu in Sn.

According to another aspect of the invention, there is provided a sealing material for use in a vacuum sealing portion of an image display device, wherein an alloy including Sn or at least one type of melting point lowering element in Sn contains at least one type of metal having an oxide generation standard free energy that is lower than that of Sn.

An image display device according to another aspect of the invention, comprising: two substrates disposed in opposite to each other with a gap; and a vacuum sealing portion which seals predetermined positions of the substrates and defines a sealed space between the two substrates, the vacuum sealing portion having a sealing material comprising at least one type of active metal in a base material that includes Su or at least one type of melting point lowering element of Pb, In, Bi, Zn, Ag, Au, or Cu in Sn, and an oxide of an active metal being formed on a boundary between the sealing material and the substrate.

An image display device according to another aspect of the invention, comprising: two glass substrates disposed in opposite to each other with a gap; and a vacuum sealing portion which seals predetermined positions of the glass substrates and defines a sealed space between the two substrates, the vacuum sealing portion including: a sealing layer containing an active metal in Sn and filled along the predetermined position; and a diffusion layer in which a component of the sealing layer is diffused at the glass substrate side of a boundary between the sealing layer and the glass substrate.

An image display device according to another aspect of the invention, comprising: two glass substrates disposed in opposite to each other with a gap; and a sealing portion which seals predetermined positions of the glass substrates and defines a sealed space between the two glass substrates, the sealing portion includes a sealing layer that contains at least one type of metal of Ag, Au, or Cu in Sn.

According to still another aspect of the invention, there is provided a method for manufacturing an image display device which comprises two substrates disposed in opposite to each other with a gap; and a vacuum sealing portion which seals predetermined positions of the substrates and defines a sealed space between the two substrates, the method comprising:
filling a sealing material which comprises at least one type of active metal in a base material that includes Su or at least one type of melting point lowering element of Pb, In, Bi, Zn, Ag, Au, or Cu in Sn, along a predetermined position of the substrate while imparting an ultrasonic wave thereto; and forming the sealing portion.

### Brief Description of Drawings

FIG. 1 is a perspective view showing an SED according to a first embodiment of the present invention.
FIG. 2 is a sectional view of the SED taken along the line II-II of FIG. 1.
FIG. 3 is a sectional view showing a boundary portion between a sealing layer and a glass substrate.
FIG. 4 is a view showing a state of containing an active metal at the boundary portion described above.
FIG. 5 is a perspective view showing an FED according to a third embodiment of the present invention.
FIG. 6 is a sectional view of the FED taken along the line VI-VI of FIG. 5.
FIG. 7 is a sectional view showing a substrate of an FED in a manufacturing process.
FIG. 8 is a sectional view showing a process for removing an oxide of a sealing material in a method for manufacturing an image display device according to a fourth embodiment of the present invention.
FIG. 9 is a sectional view showing a process for removing an oxide of a sealing material in a modified example in the fourth embodiment of the present invention.
FIG. 10 is a sectional view showing a process for removing an oxide of a sealing material in another example in the fourth embodiment of the present invention.

### Best Mode for Carrying Out the Invention

Hereinafter, with reference to the accompanying drawings, a detailed description will be given with respect to a first embodiment in which a flat-face type image display device according to the present invention is applied to a surface conduction type electron emitting device (hereinafter, referred to as SED).

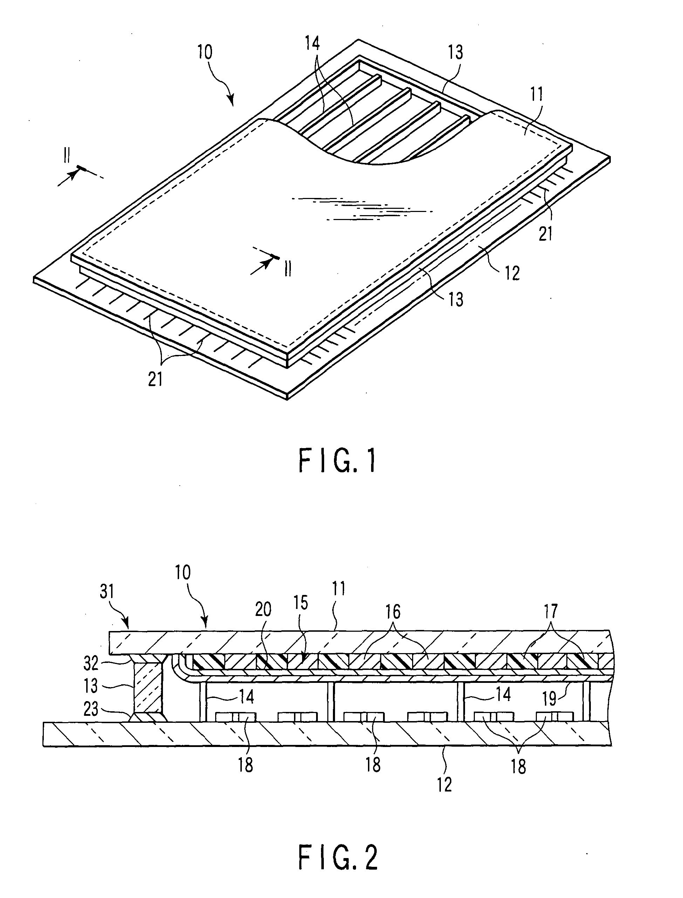

As shown in FIGS. 1 and 2, the SED is equipped with a first substrate 11 and a second substrate 12, each of which is made of a rectangular glass substrate. These substrates are disposed in opposite to each other with an interval of about 1.0 mm to 2.0 mm. The first substrate 11 and the second substrate 12 are bonded with each other at their peripheral rim portions via a rectangular frame shaped side wall 13 made of a glass, configuring a flat vacuum envelope 10 whose inside is maintained at a high vacuum on the order of 10⁻⁵.

The side wall 13 that functions as a bonding member is sealed in an inner face peripheral rim portion of the second substrate 12 by means of a low melting glass 23 such as a flit glass, for example. In addition, the side wall 13, as described later, is sealed in an inner face peripheral rim portion of the first substrate 11 by means of a vacuum sealing portion 31 including a low melting metal that serves as a sealing material. In this manner, the side wall 13 and the vacuum sealing portion 31 bond the first substrate 11 and the second substrate 12 with each other with air tightness at their peripheral rim portions, and then, a sealing space is defined between the first and second substrates.

At the inside of the vacuum envelope 10, a plurality of plate shaped support members 14 made of a glass is provided, for example, in order to support an atmospheric load applied to the first substrate 11 and the second substrate 12. These support members 14 extend in a direction parallel to long sides of the vacuum envelope 10 and are disposed at predetermined intervals along a direction parallel to short sides of the vacuum envelope 10. The shape of the support members 14 is not limited thereto in particular, and a columnar support member may be used.

A phosphor screen 15 functioning as a phosphor face is formed on an inner face of the first substrate 11. This phosphor screen 15 is equipped with: a plurality of phosphor layers 16 that emit red, green, and blue light beams; and a plurality of light shielding layers 17 formed between the phosphor layers. Each phosphor layer 16 is formed in a striped shape, a dot shape, or a rectangular shape. A metal back 20 and a getter film 19 made of a substance such as aluminum are formed sequentially in this order on the phosphor screen 15.

On an inner face of the second substrate 12, a number of surface conduction type electron emission elements 18 for emitting electron beams are provided, respectively, as electron sources for exciting the phosphor layers 16 of the phosphor screen 15. These electron emission elements 18 are arranged in a plurality of columns and in a plurality of rows, forming pixels together with the corresponding phosphor layers 16. Each electron emission element 18 is composed of an electron emission portion, which is not shown, and a pair of element electrodes or the like for applying a voltage to this electron emission portion. On the inner face of the second substrate 12, a number of wires 21 for supplying electric potentials to the electron emission elements 18 are provided in a matrix shape, and ends thereof are drawn outside of the vacuum envelope 10.

In the case where an image is displayed in the SED configured as described above, an anode voltage of 8 kV is applied, for example, to each of the phosphor screen 15 and the metal back 20, and then, the electron beams emitted from the electron emission elements 18 are accelerated by means of the anode voltage to collide with the phosphor screen. In this manner, the phosphor layer 16 of the phosphor screen 15 is excited, thereby emitting light and displaying a color image. A high voltage is applied to the phosphor screen 15, and thus, a high strain point glass is used for a plate glass for the first substrate 11, the second substrate 12, the side wall 13, and the support member 14.

Now, the vacuum sealing portion 31 sealed between the first substrate 11 and the side wall 13 will be described in detail.

As shown in FIG. 2, the vacuum sealing portion 31 has a sealing layer formed of a sealing material 32 at a predetermined position of the first substrate 11, i.e., at a rectangular frame shaped position taken along an inner face rim portion of the first substrate and at a rectangular frame shaped position taken along an end face at the side of the first substrate of the side face 13.

The inventors of the present application determined characteristics that should be provided to a sealing material for use in the vacuum sealing portion 31, and then, carried out a variety of tests in order to find a material that conforms to its requisite condition. As a result, it has been found that, by using a sealing material containing at least one type of metal from among active metals such as Ti, Zr, Hf, V, Ta, Y, Ce, and Mn in Sn or an alloy containing Sn and at least one type of melting point lowering elements such as Pb, In, Bi, Zn, Ag, and Cu, segregation of the active metal occurs on a boundary between the sealing material 32 and the substrate and a diffusion layer is formed while the active metal diffuses to the substrate side, thereby making it possible to meet a desired condition.

Conventionally, an alloy containing an active metal such as Ti, Zr, Hf, V, Ta, Y, Ce, or Mn has been used for bonding between an inorganic compound, such as oxide, nitride, or carbide, and a metal. This bonding utilizes the fact that the active metal reacts with an inorganic compound such as oxide, nitride, or carbide at a high temperature, and reaction is defined depending on a temperature and a time. A standard brazing condition is 800°C × 30 minutes. A velocity of chemical reaction exponentially increases if a temperature rises. This fact means that reaction does not advance due to slight lowering of a temperature. Therefore, reaction does not advance at a low temperature equal to or lower than 500°C, and application to bonding has not been successful. It is evident that, if an active metal is added to a low melting metal, and then, treatment is carried out at a temperature on the order of 800°C, any reaction can be expected. However, an endurable temperature of a glass panel for use in an image display device that serves as a subject matter of the present embodiment is equal to or lower than 550°C, and treatment at a high temperature is not allowable.

The inventors found by repeatedly carrying out tests that the reaction described above occasionally occurs at a low temperature, there is a bonding having a mechanical strength that can be utilized for bonding, and a bonding occurs such that a boundary tension can be changed between a metal and an inorganic material. In this manner, the object of the present invention was successfully achieved. In addition, the inventors found it effective to charge a sealing material in a predetermined site while imparting ultrasonic waves.

The solubility of an active metal in Sn or a Sn alloy is almost zero, and a liquid phase line of the alloy rapidly rises due to addition of the active metal. An advantageous effect of the active metal emerges from about 100 ppm. Thus, in order to attain an advantageous effect of the active metal without increasing a temperature of the liquid phase line, it is desirable that an additive amount of the active metal should be less than an amount at which the liquid phase line of an alloy configured by such addition is equal to or lower than 450°C and should exceed 0.001% by weight. More preferably, an amount less than 0.5% by weight and exceeding 0.01% by weight is set. However, another condition permitting, an amount at which the liquid phase line exceeds 450°C may be added. In addition, in the Sn alloy, a total amount of Sn is equal to or larger than 50% by weight. However, even if an amount of active metal at which the liquid phase line exceeds 450°C is added, functions of the present invention are not inhibited.

Hereinafter, a construction of the SED according to the first embodiment will be described in detail by way of examples.

### (Example 1)

In order to configure an SED, a first substrate 11 and a second substrate 12, each of which is made of a glass plate with a longitudinal length of 65 cm and a traverse length of 110 cm, were prepared, and a rectangular frame shaped side wall 13 made of a glass was bonded with, for example, an interior peripheral rim portion of the second substrate 12, which is one of these two substrates, by means of a flit glass. Then, on the top face of the side wall 13 and an interior peripheral rim portion of the first substrate 11, namely, at a predetermined position opposite to the side wall 13, an alloy of Ti of 0.3% by weight and Sn serving as a residue thereof was coated as a sealing material 32 with the use of an ultrasonic wave-imparted heating soldering iron, and then, a sealing layer was formed. At this time, the sealing material was filled in a state in which the solder and a glass face were placed in a nitrogen atmosphere.

A heating process was carried out in vacuum of 5 × 10⁻⁶ Pa while a gap of 20 mm was provided between these first and second substrates 11 and 12. Then, when a temperature reached 240°C in the course of cooling, the first and second substrates 11 and 12 were brought into intimate contact with each other to obtain the alignment with the sealing material, so that the Ti-Sn alloy becomes continuous on both faces. In this state, by carrying out cooling to coagulate the Sn alloy, a vacuum seal portion 31 was formed, and then, the side wall 13 and the first substrate 11 were sealed with air tightness.

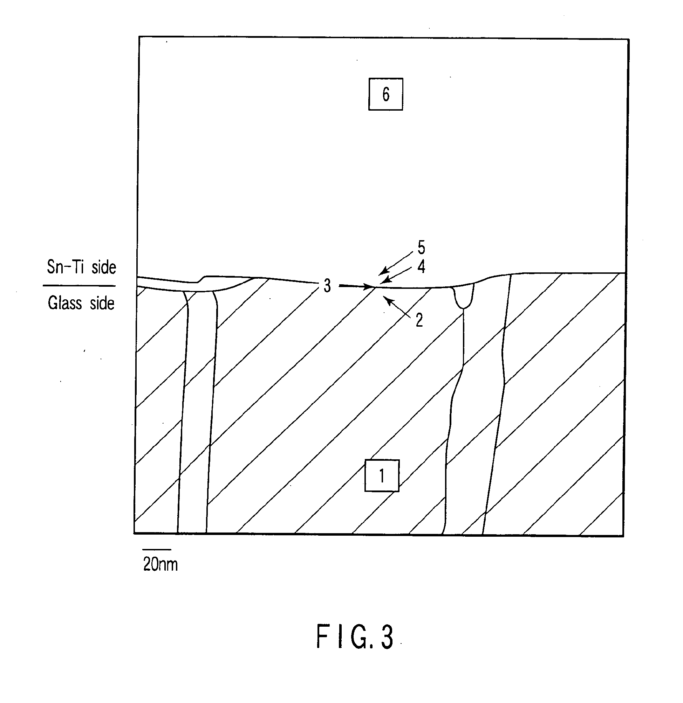

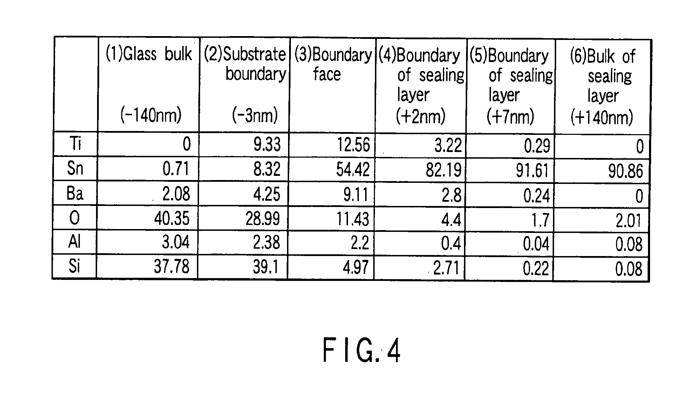

Thereafter, when the vacuum seal characteristics were evaluated via measurement pores provided in advance at corner portions of the substrate, a leak quantity equal to or smaller than 1 × 10⁻⁹ atm·cc/sec was demonstrated, showing that sufficient sealing effect was attained. In addition, from both of this result and an appearance as well, it was found that no crack occurred in a glass substrate due to metal sealing. The results obtained by cutting the sealed substrates, and then, evaluating the sealing portion by means of sectional TEM and EDX analyses are shown in FIGS. 3 and 4.

In FIG. 3, a white portion is equivalent to a sealing material, and a black portion is equivalent to a glass substrate. A state of the vicinity of a boundary between the sealing material 32 and the glass substrate was analyzed by means of EDX. 1 to 5 sites were analyzed. Reference numeral 1 is equivalent to a glass bulk (distance from boundary: -140 nm); reference numeral 2 is equivalent to a boundary proximal position at the glass substrate side (distance from boundary: -3 nm); reference numeral 3 is equivalent to a boundary; reference numerals 4 and 5 each are equivalent to a boundary proximal position of a sealing layer (distance from boundary: +2 nm, +7 nm); and reference numeral 6 is equivalent to a sealing layer bulk (distance from boundary: +140 nm).

As shown in FIG. 4, it was verified that Ti serving as an active metal segregated on the order of 3 wt% to 13 wt% at the boundary, i.e., at the analyzed sites 3, 4, and 5. It was found that a rate of segregated substances is in the range of 2 wt% to 30 wt%. In addition, the thickness of a portion at which segregation occurred was in the range of 1 nm to 500 nm.

Ti was detected at the boundary proximal position 2 at the substrate side, and it was verified that Ti diffused on a glass substrate. At the glass substrate side, the thickness of a diffusion layer 35 in which an active metal had.diffused was in the range of 1 nm to 500 nm. The content of the active metal in the sealing layer was less than 3 wt%. A composite oxide made of Si, Ti, and O was observed in the vicinity of the boundary between the sealed metal and the glass substrate.

In Comparative Example in which a sealing metal was formed by means of a heating solder without ultrasonic waves under the same material condition as that described above, the composite oxide was hardly observed. Further, when a material of which additive amount of T was less than 0.001 wt% was fabricated, and then, the sealing structure similar to the above described structure was fabricated and evaluated for the sake of comparison, a result was obtained such that an incompletely sealed site appears, and SED performance cannot be attained.

### (Example 2)

In order to configure an SED, a first substrate 11 and a second substrate 12, each of which is made of a glass plate having a longitudinal length of 65 cm and a traverse length of 110 cm, were prepared, and a rectangular frame shaped side wall 13 made of a glass was bonded with, for example, an interior peripheral rim portion of the second substrate 12, which is one of the above two substrates, by means of a flit glass. Then, on the top face of the side wall 13 and the interior peripheral rim portion of the first substrate 11, namely, in a predetermined position opposite to the side wall 13, an alloy of Ti of 0.2% by weight, Ag of 3% by weight, and Sn serving as a residue thereof was coated as a sealing material 32 with the use of an ultrasonic wave-imparted heating soldering iron, and then, a sealing layer was formed. At this time, the glass was preheated to 150°C.

A heating process was carried out in a vacuum of 5 × 10⁻⁶ Pa while a gap of 20 mm was provided between these first and second substrates 11 and 12. Then, when a temperature reached 230°C in the course of cooling, the first and second substrates 11 and 12 were brought into intimate contact with each other to obtain alignment with the sealing material, so that the Ti-Sn alloy became continuous on both of their faces. In this state, by carrying out cooling to coagulate the Sn alloy, a vacuum seal portion 31 was formed, and then, the side wall 13 and the first substrate were sealed with air tightness.

Thereafter, when the vacuum seal characteristics were evaluated via a measurement pore provided in advance at a corner portion of the substrate, a leak quantity equal to or smaller than 1 × 10⁻⁹ atm·cc/sec was demonstrated, showing that a sufficient sealing effect was attained. In addition, from both of this result and an appearance as well, it was found that no crack occurred in a glass substrate due to metal sealing. When the sealed substrates were cut, and then, a sealing portion was carefully checked, segregation of Ti serving as an active metal was verified in and in the vicinity of the boundary. In addition, Ti was detected in the vicinity of the boundary of the glass substrate side, and it was verified that Ti diffused at the glass substrate side.

In addition, a composite oxide made of Si, Ti, and O was observed in the vicinity of the boundary between the sealing metal and the glass substrate. In Comparative Example in which a sealing metal was formed by means of a heating solder without ultrasonic waves under the same material condition as that described above, the composite oxide described above was hardly observed.

### (Example 3)

In order to configure an SED, a first substrate 11 and a second substrate 12, each of which is made of a glass plate with a vertical length of 65 nm and a traverse length of 110 cm, respectively, were prepared. In addition, an insulation layer serving as an inorganic compound was formed on a surface of one of the first substrate 11 and the second substrate 12. In this Example, because wires are provided at the surface periphery of the second substrate 12, a filled face serves as an insulation paste instead of a plain glass. Then, in a predetermined location opposite to the glass substrate, namely, at an interior peripheral rim portion of the glass substrate, an alloy of Zr of 0.2% by weight, Bi of 30% by weight, and Sn serving as a residue thereof was coated as a sealing material 32 with the use of an ultrasonic wave-imparted heating soldering iron, and then, a sealing layer was formed. Next, on the sealing layer of one of the glass substrates, an Ag-coated wire made of an alloy of Fe and 37% by weight of Ni (1.5 mm in diameter) was placed in a frame shape as a spacer.

A gap of 100 mm was provided between the first substrate 11 and the second substrate 12, and then, a heating and gas evacuation process was carried out in vacuum of 5 × 10⁻⁶ Pa. Next, when a temperature reached 250°C in the course of cooling, the first substrate 11 and the second substrate 12 are pasted with each other at predetermined positions via the sealing material 32. Then, the molten Zr-Bi-Sn alloy became wet because they had good affinity with each other via an Fe-Ni alloy wire, and then, a gapless state was established. In this state, the resulting alloy was coagulated, a vacuum sealing portion 31 was formed, and then, the first substrate 11 and the second substrate 12 were sealed. With respect to this SED, a vacuum leak test similar to that of Example 1 was carried out, and then, a similar advantageous effect was obtained.

When the sealed substrates were cut, and then, the sealing portion was checked, segregation of Zr serving as an active metal was verified on a boundary and in the vicinity of the boundary. In addition, Zr was detected in the vicinity of the boundary at the glass substrate side, and then, it was verified that Zr diffused at the glass substrate side.

In addition, a composite oxide made of Si, Ti, and O was observed in the vicinity of the boundary between the sealing layer and the glass substrate. In Comparative Example in which a sealing metal was formed by means of a heating solder without ultrasonic waves under the same material condition as that described above, the composite oxide described above was hardly observed.

### (Example 4)

In order to configure an SED, a first substrate 11 and a second substrate 12, each of which is made of a glass plate with a longitudinal length of 65 cm and a traverse length of 110 cm, were prepared, and a rectangular frame shaped side wall 13 made of a glass was bonded with one of the substrates, for example, an interior peripheral rim portion of the second substrate 12 by means of a flit glass. Next, on the top face of the side wall 13 and the interior peripheral rim portion of the first substrate 11, namely, in a predetermined position opposite to the sided wall 13, an alloy of Ti of 0.2% by weight, Bi of 35% by weight, and Sn serving as a residue thereof was coated as a sealing material 32 with the use of an ultrasonic wave-imparted heating soldering iron, and then, a sealing layer was formed. At this time, a portion at which the glass and the solder abut against each other was disposed in an Ar-atmosphere, and oxidization of the Ti-Bi-Sn alloy described previously was reduced.

A heating process was carried out in a vacuum of 5 × 10⁻⁶ Pa while a gap of 20 mm was provided between these first and second substrates 11 and 12. Then, when a temperature reached 200°C in the course of cooling, the first and second substrates 11 and 12 were brought into intimate contact with each other to obtain alignment with the sealing material, so that the Ti-Bi-Sn alloy became continuous on both of their faces. In this state, by carrying out cooling to coagulate the alloy, a vacuum sealing portion 31 was formed, and then, the side wall 13 and the first substrate were sealed with air tightness.

Thereafter, when the vacuum seal characteristics were evaluated via a measurement pore provided in advance at a corner portion of the substrate, a leak quantity equal to or smaller than 1 × 10⁻⁹ atm·cc/sec was demonstrated, showing that sufficient sealing effect was attained. In addition, from both of this result and an appearance as well, it was found that no crack occurred in a glass substrate due to metal sealing.

When the sealed substrates were cut, and then, the sealing portion was checked, segregation of Ti serving as an active metal was verified on a boundary and in the vicinity of the boundary. In addition, Ti was detected in the vicinity of the boundary at the glass substrate side, and then, it was verified that Ti diffused at the glass substrate side.

In addition, a composite oxide made of Si, Ti, and O was observed in the vicinity of the boundary between the sealing metal and the glass substrate. In Comparative Example in which a sealing metal was formed by means of a heating solder without ultrasonic waves under the same material condition as that described above, the composite oxide described above was hardly observed.

As has been described above, according to the present embodiment and Examples, there can be provided a sealing material and a flat face type image display device using the sealing material that is capable of sealing a large-sized glass-based container that requires high vacuum, that is capable of maintaining a high degree of vacuum, and that has improved reliability.

### (Example 5)

In order to configure an SED, a first substrate 11 and a second substrate 12, each of which is made of a glass plate with a longitudinal length of 65 cm and a traverse length of 110 cm, were prepared, and a rectangular frame shaped side wall 13 made of a glass was bonded with, for example, an interior peripheral rim portion of the second substrate 12, which is one of these two substrates, by means of a flit glass. Next, on the top face of the side wall 13 and at the interior peripheral rim portion of the first substrate 11, namely, in a predetermined location opposite to the side wall 13, a paste was printed in a width of 10 nm and with a thickness of 10 µm using a screen printing device. The paste was obtained by blending a binder, in order to impart viscosity, to a composite material obtained by blending Ag powders and flit glass powders at a weight ratio of 5:5. Then, the first substrate 11 and the side wall 13 were burned under a predetermined condition by means of an atmospheric furnace. An alloy of Ti of 0.4% by weight and Sn serving as a residue thereof was coated as a sealing material 32 with the use of an ultrasonic wave-imparted heating soldering iron, and then, a sealing layer was formed.

A heating process was carried out in a vacuum of 5 × 10⁻⁶ Pa while a gap of 20 mm was provided between these first and second substrates 11 and 12. Then, when a temperature reached 200°C in the course of cooling, the first and second substrates 11 and 12 were brought into intimate contact with each other to obtain alignment with the sealing material, so that the Ti-Sn alloy becomes continuous on both of their faces. In this state, by carrying out cooling to coagulate the Sn alloy, a vacuum sealing portion 31 was formed, and then, the side wall 13 and the first substrate were sealed with air tightness.

Thereafter, when the vacuum seal characteristics were evaluated via a measurement pore provided in advance at a corner portion of the substrate, a leak quantity equal to or smaller than 1 × 10⁻⁹ atm·cc/sec was demonstrated, showing that sufficient sealing effect was attained. In addition, from both of this result and an appearance as well, it was found that no crack occurred in a glass substrate due to metal sealing. When the sealed substrates were cut, and then, the sealing portion was checked, a composite oxide made of Si, Ti, and O was observed in the vicinity of the boundary between the sealing metal and the substrate. In addition, an alloy phase of Ag and Sn was observed. In Comparative Example in which the sealing metal was formed by means of a heating solder without ultrasonic waves under the same material condition as that described above, the composite oxide described above was hardly observed. In this Example, although Ag powders were used, Fe, Cu, Al, Ni, or an alloy thereof is also effective without being limited to Ag.

In the first embodiment described above, a surface of a glass substrate can be contaminated during a manufacturing process. In the case of considering such contamination of the glass substrate surface, for the purpose of reliably retaining a sealing material molten at the time of vacuum heating on the glass substrate, an undercoat layer may be formed on the glass substrate, whereby the sealing material may be filled on this metal undercoat layer. In this case, a mixed layer of the sealing material and the metal undercoat layer is produced, making it possible to further improve wetting property of the sealing material. As the undercoat layer, a glass paste, a metal paste, or a metal thin film is properly used. As the metal material, it is desirable to include at least one of Ag, Ni, Fe, Cu, and Al.

Now, an SED according to a second embodiment of the present invention will be described below. This SED has the same basic construction as that of the SED according to the first embodiment shown in FIGS. 1 and 2, and only the construction of the vacuum sealing portion 31 is different. Therefore, a description of the basic construction is omitted here. Only the construction of the vacuum seal portion 31 will be described in detail.

According to the second embodiment, as shown in FIG. 2, the vacuum seal portion 31 has a sealing layer formed of a sealing material 32 at a predetermined position of the first substrate 11, i.e., between a rectangular frame shaped position taken along the interior peripheral rim portion of the first substrate and a rectangular frame shaped position taken along an end face at the first substrate side of the side wall 13.

The inventors of the present invention determined characteristics that should be provided to a sealing material used in the vacuum sealing portion 31, and then, carried out a variety of tests in order to find a material that conforms to the relevant condition. As a result, the inventors found that a desired condition can be met by using a sealing material that contains at least one type of metal having an oxide generation standard free energy that is lower than that of Sn, in Sn or an alloy containing Sn and at least one type of melting point lowering element such as Ag, Au, or Cu, for example. If a metal having an oxide generation standard free energy that is lower than that of Sn, for example, Cr is added, Cr is oxidized prior to Sn in an atmosphere in which Sn is oxidized, and then, a Cr oxide film is formed on a surface of the sealing material. In this manner, generation of SnO₂ that serves as a strong oxide is suppressed. Therefore, in a substrate laminating process, which will be described later, the breakage of the Cr oxide film easily occurs, and a continuous body of a sealing material required for vacuum sealing can be obtained.

In addition to Cr, a metal such as Al or Si can be used as having an oxide generation standard free energy that is lower than that of Sn. It is desirable that its additive amount should be in the range of 0.001 wt% to 2 wt%. Even if the additive amount is very small, the oxide film of the additive element is formed on the surface of the sealing material. If the additive amount is too large, a melting point of the sealing material rises, and then, the use temperature range in the process for manufacturing an FED is exceeded. In this case, sealing becomes difficult, and a sealing property is also lowered.

A construction of the SED according to the second embodiment will be described below in detail with reference to Examples.

### (Example 1)

In order to configure an SED, a first substrate 11 and a second substrate 12, each of which is made of a glass plate with a longitudinal length of 65 cm and a traverse length of 110 cm, were prepared, and a rectangular frame shaped side wall 13 made of a glass was bonded with, for example, an interior peripheral rim portion of the second substrate 12, which is one of these two substrates, by means of a flit glass. Then, on the top face of the side wall 13 and an interior peripheral rim portion of the first substrate 11, namely, at a predetermined position opposite to the side wall 13, an alloy of Cr of 1% by weight and Sn serving as a residue thereof was coated as a sealing material. At this time, with the use of an ultrasonic wave-imparted heating soldering iron, the alloy was coated while ultrasonic waves were applied to the sealing material.

Next, the first substrate 11 and the second substrate 12 were disposed in opposite to each other with a gap of 100 mm, and then, a heating process was carried out in vacuum of 5 × 10⁻⁶ Pa. Then, when a temperature reached that equal to or higher than a melting point of the sealing material, for example, 240°C in the course of cooling, the first substrate 11 and the second substrate 12 are brought into intimate contact with each other to obtain alignment with the sealing material, so that the sealing material became continuous on both of their faces. By carrying out cooling to coagulate the sealing material in this state, a vacuum seal portion 31 was formed, and then, the side wall 13 and the first substrate 11 were sealed with air tightness.

Thereafter, when the vacuum seal characteristics were evaluated via measurement pores provided in advance at corner portions of the substrate, a leak quantity equal to or smaller than 1 × 10⁻⁹ atm·cc/sec was demonstrated, showing that sufficient sealing effect was attained. In addition, from both of this result and an appearance as well, it was found that no crack occurred in a glass substrate due to metal sealing.

### (Example 2)

In order to configure an SED, a first substrate 11 and a second substrate 12, each of which is made of a glass plate of a longitudinal length of 65 cm and a traverse length of 110 cm, was prepared, and a rectangular frame shaped side wall 13 made of a glass was bonded with, for example, the interior peripheral rim portion of the second substrate, which is one of these two substrates, by a flit glass. Next, on the top face of the side wall 13 and the interior peripheral rim portion of the first substrate 11, namely, in a predetermined location opposite to the side wall 13, an alloy of Cr of 0.5% by weight, Ag of 3% by weight, and Sn serving as a residue thereof was coated with the use of an ultrasonic wave-imparted heating soldering iron while ultrasonic waves were applied to the sealing material. At this time, the substrate and the side wall were heated to 200°C.

Next, the first substrate 11 and the second substrate 12 were disposed in opposite to each other with a gap of 100 mm, and then, a heating process was carried out in vacuum of 5 × 10⁻⁶ Pa. Then, when a temperature reached that equal to or higher than a melting point of the sealing material, for example, 250°C, in the course of cooling, the first substrate 11 and the second substrate 12 are brought into intimate contact with each other to obtain alignment with the sealing material, so that the sealing material became continuous on both of their faces. By carrying out cooling to coagulate the sealing material in this state, a vacuum seal portion 31 was formed, and then, the side wall 13 and the first substrate 11 were sealed with air tightness.

Thereafter, when the vacuum seal characteristics were evaluated via measurement pores provided in advance at corner portions of the substrate, a leak quantity equal to or smaller than 1 × 10⁻⁹ atm·cc/sec was demonstrated, showing that sufficient sealing effect was attained. In addition, from both of this result and an appearance as well, it was found that no crack occurred in a glass substrate due to metal sealing.

### (Example 3)

In order to configure an SED, a first substrate 11 and a second substrate 12, each of which is made of a glass plate of a longitudinal length of 65 cm and a traverse length of 110 cm, were prepared, and a rectangular frame shaped side wall 13 made of a glass was bonded with the interior peripheral rim portion of the second substrate, which is one of the substrates, by means of a flit glass. Then, on the top face of the side wall 13 and the interior peripheral rim portion of the first substrate 11, namely, in a predetermined location opposite to the side wall 13, a paste made of Ag: 70, low melting glass: 25, and a blend of polymeric binder and thickener: 5 in a weight ratio was burned under a predetermined condition after screen printing, and then, an undercoat was formed. Thereafter, an alloy of Cr of 1% by weight and Sn serving as a residue thereof was coated as a sealing material on the undercoat. At this time, with the use of an ultrasonic-imparted heating soldering iron, the alloy was coated while applying ultrasonic waves to the sealing material.

Next, the first substrate 11 and the second substrate 12 were disposed in opposite to each other at a gap of 100 mm, and then, a heating process was carried out in vacuum of 5 × 10⁻⁶ Pa. Thereafter, when a temperature reached that equal to or higher than a melting point of the sealing material, for example, 240°C in the course of cooling, the first substrate 11 and the second substrate 12 are brought into intimate contact with each other to obtain alignment with the sealing material, so that the sealing material became continuous on both of their faces. By carrying out cooling to coagulate the sealing material in this state, a vacuum seal portion 31 was formed, and then, the side wall 13 and the first substrate 11 were sealed with air tightness.

Thereafter, when the vacuum seal characteristics were evaluated via measurement pores provided in advance at corner portions of the substrate, a leak quantity equal to or smaller than 1 × 10⁻⁹ atm·cc/sec was demonstrated, showing that sufficient sealing effect was attained. In addition, from both of the above measurement result and an appearance as well, it was found that no crack occurred in a glass substrate due to metal sealing.

As has been described above, according to the second embodiment and Examples, there can be provided a sealing material and a flat face type image display device using the sealing material that is capable of sealing a large-sized glass-based container that requires high vacuum, that is capable of maintaining a high degree of vacuum, and that has improved reliability.

Now, a detailed description will be given with respect to a third embodiment in which a flat face type image display device according to the present invention is applied to an FED.

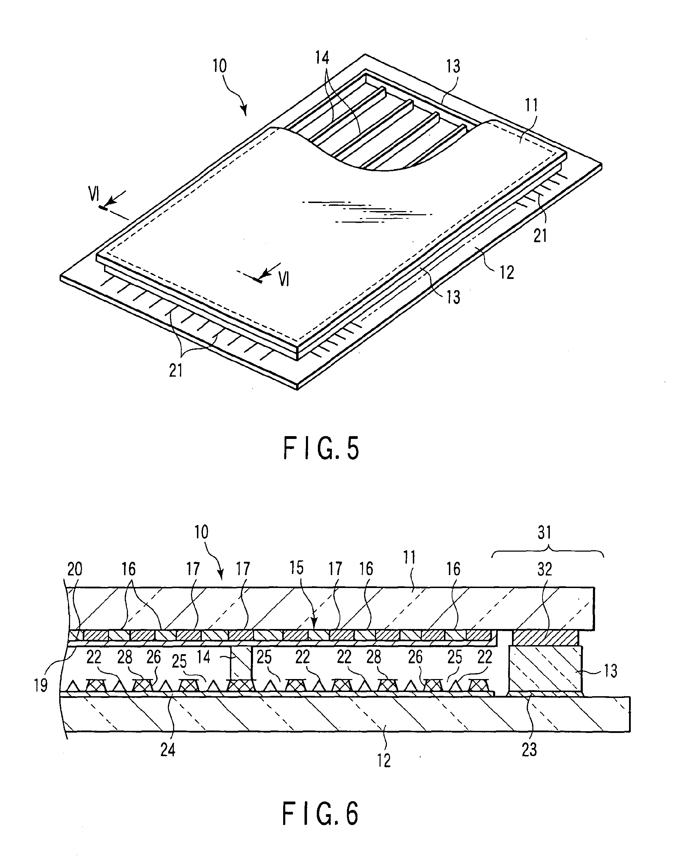

As shown in FIGS. 5 and 6, an FED is equipped with a first substrate 11 and a second substrate 12, each of which is made of a rectangular glass substrate, and these substrates are disposed to be opposed to each other with an interval of about 1.0 mm to 2.0 mm. The first substrate 11 and the second substrate 12 are bonded with each other at their peripheral rim portions via a rectangular frame shaped side wall 13, configuring a flat vacuum envelope 10 whose inside is maintained in vacuum.

The side wall 13 functioning as a bonding member, for example, is sealed in an interior peripheral rim portion of the second substrate 12 by means of a low melting glass 23 such as a flit glass. The side wall 13, as described later, is sealed in an interior peripheral rim portion of the first substrate 11 by means of a vacuum sealing portion that includes a low melting metal as a sealing material. In this manner, the side wall 13 and the vacuum sealing portion bond the peripheral rim portions of the first substrate 11 and the second substrate 12 with air tightness, defining a sealed space between the first and second substrates.

A plurality of planar support members 14 made of a glass, for example, are provided inside the vacuum envelope 10, in order to support an atmospheric load applied to the first substrate 11 and the second substrate 12. These support members 14 extend in a direction parallel to long sides of the vacuum envelope 10 and are disposed at predetermined intervals along a direction parallel to short sides of the vacuum envelope 10. With respect to the shape of the support members 14, columnar support members may be employed without being limited to the planar shape in particular.

A phosphor screen 15 functioning as a phosphor face is formed at an inner face of the first substrate 11. This phosphor screen 15 is equipped with a plurality of phosphor layers 16 that emit red, green, and blue lights and a plurality of light shielding layers 17 formed between the phosphor layers. Each phosphor layer 16 is formed in a striped shape, in a dot shape, or in a rectangular shape. A metal back 20 and a getter layer made of a substance such as aluminum are formed sequentially in this order on the phosphor screen 15.

On the inner face of the second substrate 12, a number of electron emission elements 22 for emitting electron beams are provided, respectively, as electron sources for exciting the phosphor layers 16 of the phosphor screen 15. In more detail, a conductive cathode layer 24 is formed on the inner face of the second substrate 12, and then, a silicon dioxide film 26 having a number of cavities 25 is formed on this conductive cathode layer. A gate electrode 28 made of a substance such as molybdenum or niobium is formed on the silicon dioxide film 26. Then, on the inner face of the second substrate 12, a conically shaped electron emission element 22 made of a substance such as molybdenum is provided in each cavity 25. These electron emission elements 22 are arranged in a plurality of columns and in a plurality of rows in association with pixels. In addition, on the second substrate 12, a number of wires 21 for supplying an electric potential to the electron emission elements 22 are provided in a matrix shape, and their ends are drawn out from the vacuum envelope 10.

In the FED configured as described above, a video image signal is inputted to the electron emission element 22 and the gate electrode 28. In the case where the electron emission element 22 is defined as a reference, a gate voltage of +100V is applied during a state in which luminescence is the highest. In addition, +10 kV is applied to the phosphor screen 15. Then, the size of electron beams emitted from the electron emission elements 22 is modulated by means of a voltage of the gate electrode 28, and the electron beams excite and cause the phosphor layer of the phosphor screen 15 to emit light, thereby displaying an image. Since a high voltage is applied to the phosphor screen 15, a high strain point glass is used as a plate glass for the first substrate 11, the second substrate 12, the side wall 13, and the support member 14.

Now, a detailed description will be given with respect to a vacuum sealing portion 31 for sealing a gap between the first substrate 11 and the side wall 13.

As shown in FIG. 6, the vacuum sealing portion 31 has a sealing layer formed of a sealing material 32 between a predetermined position of the first substrate 11, i.e., a rectangular frame shaped position taken along the interior peripheral rim portion of the first substrate, and a rectangular frame shaped position taken along an end face of the first substrate side of the side wall 13.

The inventors of the present application determined characteristics which should be provided to a sealing material for use in the vacuum sealing portion, and then, carried out a variety of tests in order to find a material that conforms to the condition. As a result, the inventors found that a desired condition can be met by using a sealing material that contains at least one type of metal among Ag, Au, and Cu, in Sn. When at least one type of metal selected from Ag, Au, and Cu is added to Sn, SnO₂ serving as a rigid oxide can be restrained from being generated on a surface of the sealing material 32, namely, on a surface of a sealing layer. Therefore, in a later substrate laminating process, the oxide film formed on the surface of the sealing material 32 is easily broken, and then, a continuous body of a sealing material required for vacuum sealing can be obtained.

An additive quantity of Ag, Au, and Cu to Sn is in the range of 0.1 wt% to 10 wt%, and more desirably, 0.5 wt% to 4 wt%. Even if the additive quantity is very small, an oxide film of an additive element is formed on the surface of the sealing material 32. If the additive quantity is too large, a sealing layer becomes hardened and brittle, and thus, the sealing property of the sealing portion is lowered.

Now, a configuration of the FED according to the third embodiment will be described in detail by way of examples.

### (Example 1)

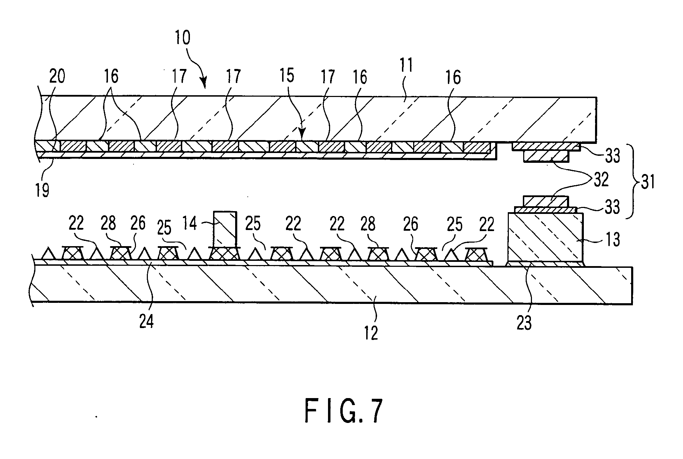

In order to configure an FED, a first substrate 11 and a second substrate 12, each of which is made of a glass plate having a longitudinal length of 65 cm and a traverse length of 110 cm, were prepared, and a rectangular frame shaped side wall 13 made of a glass was bonded with, for example, an interior peripheral rim portion of the second substrate, which is one of these two substrates, by means of a flit glass. Then, as shown in FIG. 7, a glass paste made of glass flit powders, Ag powders (weight ratio between glass flit and Ag is 1 to 1), and a viscosity adjustment material was printed on a top face of the side wall 13 and the interior peripheral rim portion of the first substrate 11, namely, a predetermined position opposite to the side wall 13, and the paste was burned under a predetermined condition, thereby forming an undercoat layer 33. Next, a sealing material 32, namely, an alloy of Sn and 3.5%-Ag was fused after being laminated on the undercoat layer with the use of a soldering iron to which ultrasonic waves were provided, and then, a sealing layer was formed.

Subsequently, the first substrate 11 and the second substrate 12 are disposed to be opposed to each other at an interval of 100 mm, and then, these substrates were heated in vacuum of 5 × 10⁻⁶. Then, when a temperature reached 240°C, for example, which is a temperature equal to or higher than a melting point of the sealing material, in the course of cooling, the sealing materials were aligned to bring the first substrate 11 and the second substrate 12 into intimate contact with each other so that the sealing materials became continuous on both of their faces. By coagulating the sealing material while cooling was carried out in this state, a vacuum sealing portion was formed, and then, the side wall 13 and the first substrate 11 were sealed with air tightness.

Thereafter, when vacuum sealing characteristics were evaluated via measurement pores provided in advance at corners of the substrate, a leak quantity indicated 1 × 10⁻⁹ atm·cc/sec or less, showing that a sufficient sealing effect was attained. In addition, from the viewpoints of this measurement result and appearance as well, it was found that no crack occurred in a glass substrate caused by sealing using a metal sealing material.

### (Example 2)

In order to configure an FED, a first substrate 11 and a second substrate 12, each of which is made of a glass plate having a longitudinal length of 65 cm and a traverse length of 110 cm, were prepared, and a rectangular frame shaped side wall 13 made of a glass was bonded with, for example, an interior peripheral rim portion of the second substrate, which is one of these two substrates, by means of a flit glass. Then, a glass paste made of glass flit powders, Ag powders (weight ratio between glass flit and Ag is 1 to 2), and a viscosity adjustment material was printed on a top face of the side wall 13 and the interior peripheral rim portion of the first substrate 11, namely, a predetermined position opposite to the side wall 13, and the paste was burned under a predetermined condition, thereby forming an undercoat layer 33. Next, a sealing material 32, namely, Sn, was fused after being laminated on the undercoat layer with the use of a soldering iron to which ultrasonic waves were provided, and then, a sealing layer was formed.

Subsequently, the first substrate 11 and the second substrate 12 were disposed to be opposed to each other at an interval of 100 mm, and then, these substrates were heated in vacuum of 5 × 10⁻⁶. Then, when a temperature reached 240°C, for example, which is a temperature equal to or higher than a melting point of the sealing material, in the course of cooling, the sealing materials were aligned to bring the first substrate 11 and the second substrate 12 into intimate contact with each other so that the sealing material and the undercoat layer became continuous on both of their faces. By coagulating the sealing material while cooling was carried out in this state, a vacuum sealing portion was formed, and then, the side wall 13 and the first substrate 11 were sealed with air tightness.

Thereafter, when vacuum sealing characteristics were evaluated via measurement pores provided in advance at corners of the substrate, a leak quantity indicated 1 × 10⁻⁹ atm-cc/sec or less, showing that a sufficient sealing effect was attained. In addition, when element analysis was carried out with respect to the vacuum sealing portion, an SnAg alloy was observed at both of a metal portion of the undercoat layer and a metal portion of the sealing layer.

### (Example 3)

In order to configure an FED, a first substrate 11 and a second substrate 12, each of which is made of a glass plate having a longitudinal length of 65 cm and a traverse length of 110 cm, were prepared, and a rectangular frame shaped side wall 13 made of a glass was bonded with, for example, an interior peripheral rim portion of the second substrate, which is one of these two substrates, by means of a flit glass. Then, a glass paste made of glass flit powders, Ni powders (weight ratio between glass flit and Ni is 1 to 2), and a viscosity adjustment material was printed on a top face of the side wall 13 and the interior peripheral rim portion of the first substrate 11, namely, a predetermined position opposite to the side wall 13, and the paste was burned under a predetermined condition, thereby forming an undercoat layer 33. Next, a sealing material 32, namely, an alloy of Sn, 3.5% Ag, and 0.5% Cu, was fused after being laminated on the undercoat layer with the use of a soldering iron to which ultrasonic waves were provided, and then, a sealing layer was formed.

Subsequently, the first substrate 11 and the second substrate 12 are disposed to be opposed to each other at an interval of 100 mm, and then, these substrates were heated in vacuum of 5 × 10⁻⁶. Then, when a temperature reached 240°C, for example, which is a temperature equal to or higher than a melting point of the sealing material, in the course of cooling, the sealing materials were aligned to bring the first substrate 11 and the second substrate 12 into intimate contact with each other so that the sealing materials became continuous on both of their faces. By coagulating the sealing material while cooling was carried out in this state, a vacuum sealing portion was formed, and then, the side wall 13 and the first substrate 11 were sealed with air tightness.

Thereafter, when vacuum sealing characteristics were evaluated via measurement pores provided in advance at corners of the substrate, a leak quantity indicated 1 × 10⁻⁹ atm·cc/sec or less, showing that a sufficient sealing effect was attained. In addition, from the viewpoints of this measurement result and appearance as well, it was found that no crack occurred in a glass substrate caused by sealing using a metal sealing material.

As has been described above, according to the third embodiment and Examples, there can be provided a flat face type image display device that is capable of sealing a large-sized glass-based container that requires high vacuum, that is capable of maintaining a high degree of vacuum, and that has improved reliability.

Now, a description will be given with respect to an FED and a method for manufacturing the same according to a fourth embodiment of the present invention. The FED is equipped with a basic construction that is identical to that of the FED according to the third embodiment, which is shown in FIGS. 5 and 6, with a difference only in a construction of the vacuum sealing portion 31. Therefore, a description of the basic construction is omitted here, and only the construction of the vacuum sealing portion 31 will be described in detail.

According to the fourth embodiment, as shown in FIG. 6, the vacuum sealing portion 31 has a sealing layer formed of a sealing material 32 between a predetermined position of the first substrate 11, i.e., at a rectangular frame shaped position taken along an inner face rim portion of the first substrate, and a rectangular frame shaped position taken along an end face at the first substrate side of the side wall 13.

The inventors of the present application determined characteristics that should be provided to a sealing material for use in the vacuum sealing portion 31, and then, carried out a variety of tests in order to find a sealing structure that conforms to the condition. A sealing material obtained by, with Sn used as a main component, adding at least one type of melting point lowering elements such as Ag, Cu, Bu, and Au or at least one type of active metals such as Ti, Cr, Zr, Hf, Al, and Ta, or alternatively, a sealing material obtained by adding both of the melting point lowering element and active metal at the same time, is used. The inventors found that a predetermined condition can be met by way of applying beams with high energy such as laser or plasma beams or their atmosphere to a surface of the sealing material immediately before forming the sealing portion. In other words, an oxide film dissipates from the surface of the sealing material by applying beams with high energy such as laser or plasma beams or their atmosphere to the sealing material.

Even if a seal is formed by means of this treatment, a continuous oxide film, which serves as a leak path, does not exist at a laminate portion, so that an envelope with high vacuum can be obtained. In an operation of applying high energy beams or atmosphere to a sealing material, it was found that, even if an oxide film cannot be removed completely, a predetermined sealing performance can be maintained as long as the thickness of the continuous oxide film on the alignment face of the sealing materials is equal to or smaller than 500 nm.

Now, a construction of, and a method for manufacturing the FED according to the fourth embodiment will be described in detail by way of example.

### (Example 1)

In order to configure an FED, a first substrate 11 and a second substrate 12, each of which is made of a glass plate having a longitudinal length of 6.5 cm and a traverse length of 110 cm, were prepared, and a rectangular frame shaped side wall 13 made of a glass was bonded with, for example, an interior peripheral rim portion of the second substrate, which is one of these two substrates, by means of a flit glass. Then, at the top face of the side wall 13 and at the interior peripheral rim portion of the first substrate 11, namely, at a predetermined position opposed to the side wall 13, an alloy of 0.4 wt% Ti and Sn that serves as a residue thereof, were coated as a sealing material 32 while ultrasonic waves were applied to the sealing material with the use of an ultrasonic wave-imparted heating soldering iron.

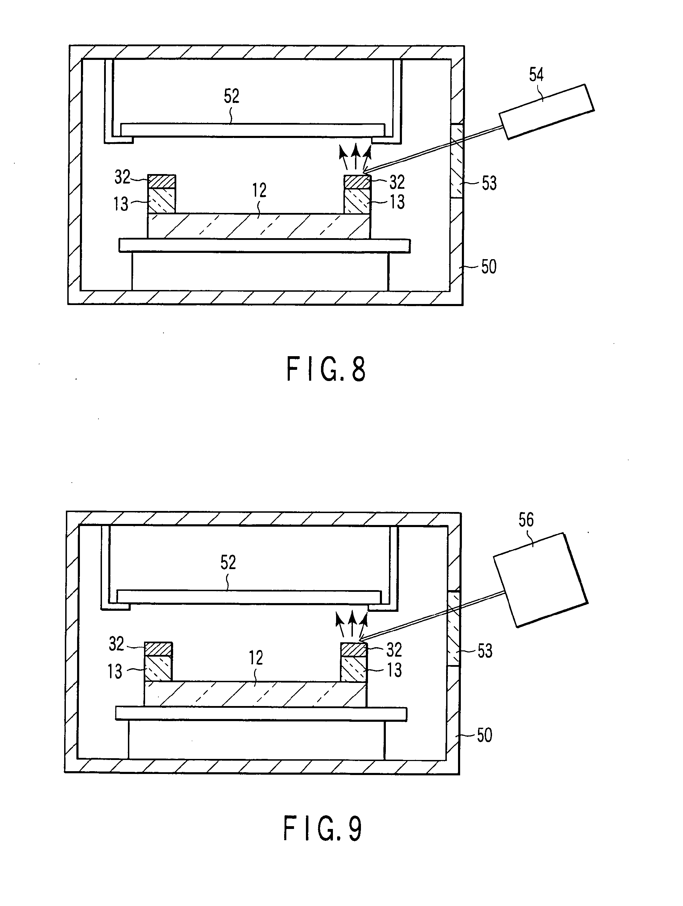

Subsequently, a gap of 100 mm was provided between these first and second substrates, and then, a heating process such as baking was carried out in a vacuum chamber of 5 × 10⁻⁶ Pa. Then, as shown in FIG. 8, in a vacuum chamber 50, a dummy substrate 52 made of a glass substrate, for example, is disposed in opposite to each substrate, namely the second substrate 12 in this case at a predetermined interval. In this state, when a temperature of the substrate reached 120°C in the course of cooling, scanning was carried out while YAG laser beams guided by means of an optical fiber 54 were applied to the surface of the sealing material 32 through a window 53 provided at the wall portion of the vacuum chamber 50. By means of this process, an oxide film that exists on the surface of the sealing material 32 dissipates, and then, is removed. The oxide film having dissipated is adhered to and captured by the dummy substrate 52.

An average output of laser beams was set at 1.3 mJ (1 pulse); a pulse half-value width was set at 120 ns; and a frequency was set at 1 KHz. These values can be selected as required. Laser beam scanning is carried out by relatively moving the laser beams and the substrate 12. In this Example, the surface of the sealing material 32 was fully scanned by means of laser beams while moving the substrate 12. In the case where the dummy substrate was contaminated after a plurality of substrates were processed, cleaning of the dummy substrate or replacement with a new dummy substrate is carried out.

With respect to the sealing material 32 filled on the first substrate 11 as well, processing is carried out by means of laser beams in the same manner as that described above.

When the oxide is removed from the surface of the sealing material 32, as shown in FIG. 9, the sealing material 32 filled in the first substrate 12 disposed in the vacuum chamber 50 is irradiated with the plasma radiated from a plasma generator 56, whereby the oxide, namely, an oxide film may be removed.

Next, after the first and second substrates 11 and 12 were positioned and opposed to each other so as to align the sealing material 32, these substrates were brought into intimate contact with each other while the sealing material 32 was heated, so that an alloy of Sn and 0.4% Ti became continuous on both of their faces. By carrying out cooling to coagulate the alloy in this state, a vacuum sealing portion 31 was formed, and then, the side wall 13 and the first substrate were sealed with air tightness.

Thereafter, when vacuum sealing characteristics were evaluated via measurement pores provided in advance at corners of the substrate, a leak quantity indicated 1 × 10⁻⁹ Pa·m³/sec or less, showing that a sufficient sealing effect was attained. In addition, from the viewpoints of both of the above measurement result and appearance as well, it was found that no crack occurred in a glass substrate caused by sealing using a metal sealing material.

### (Example 2)

In order to configure an FED, a first substrate and a second substrate, each of which is made of a glass plate having a longitudinal length of 65 cm and a traverse length of 110 cm, were prepared, and a rectangular frame shaped side wall 13 made of a glass was bonded with, for example, an interior peripheral rim portion of the second substrate, which is one of these two substrates, by means of a flit glass. Then, at the top face of the side wall 13 and at the interior peripheral rim portion of the first substrate 11, namely, at a predetermined position opposed to the side wall 13, an alloy of 0.5 wt% Cr, 3 wt% Ag, and Sn that serves as a residue thereof, was coated as a sealing material 32 while ultrasonic waves were applied to the sealing material with the use of an ultrasonic wave-imparted heating soldering iron. At this time, the substrate was heated to 200°C. Immediately after the above process, the oxide film was continuously removed from the surface of the sealing material 32 by applying carbon dioxide gas laser beams guided by means of a mirror to the sealing material 32 and scanning the substrate. An oxide film removing process with the use of the laser beams described above was carried out with respect to both of the sealing material 32 of the first substrate 11 and the sealing material 32 of the side wall 13.

A gap of 100 mm was provided between these first and second substrates, and then, was heated in vacuum of 5 × 10⁻⁶ Pa. When a temperature reached 250°C in the course of cooling, the first and second substrates were brought into intimate contact with each other to obtain alignment with the sealing material, so that the sealing material 32 became continuous on both of their faces. By carrying out cooling to coagulate the sealing material 32, in this state, a vacuum sealing portion 31 was formed, and then, the side wall 13 and the first substrate were sealed with air tightness.

Thereafter, when vacuum sealing characteristics were evaluated via measurement pores provided in advance at corners of the substrate, a leak quantity indicated 1 × 10⁻¹² Pa·m³/sec or less, showing that a sufficient sealing effect was attained. In addition, from the viewpoints of both of the above measurement result and appearance as well, it was found that no crack occurred in a glass substrate caused by sealing using a metal sealing material.

### (Example 3)

In order to configure an FED, a first substrate 11 and a second substrate 12, each of which is made of a glass plate having a longitudinal length of 65 cm and a traverse length of 110 cm, were prepared, and a rectangular frame shaped side wall 13 made of a glass was bonded with, for example, an interior peripheral rim portion of the second substrate, which is one of these two substrates, by means of a flit glass. Next, at the top face of the side wall 13 and at the interior peripheral rim portion of the first substrate 11, namely, at a predetermined position opposed to the side wall 13, a paste was printed with a width of 10 mm and a thickness of 10 µm. The paste was obtained by blending a binder, in order to provide viscosity, to a composite material obtained by mixing Ag powders and flit glass powders in a weight ratio of 5:5 by means of a screen printing device. Then, undercoat layers were formed at sealing portions, respectively, by burning the first substrate 11 and the side wall 13 by means of an atmospheric furnace under a predetermined condition.

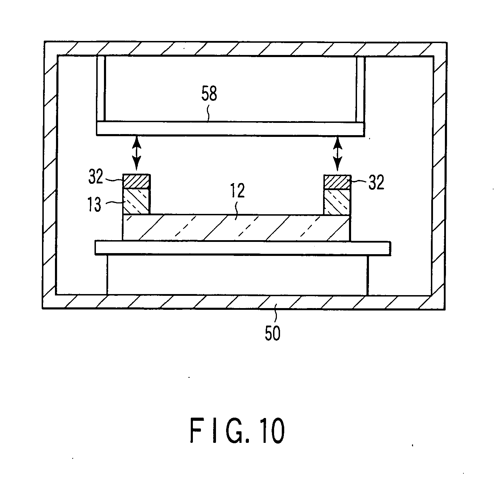

Then, at the top face of the side wall 13 and at the interior peripheral rim portion of the first substrate 11, namely, at a predetermined position opposed to the side wall 13, an alloy of 43 wt% Bi and Sn that serves as a reside thereof was coated as a sealing material 32 while ultrasonic waves were applied with the use of an ultrasonic wave-imparted heating soldering iron. At this time, the substrate was heated to 200°C. Immediately after the above process, as shown in FIG. 10, in a vacuum chamber 50 depressurized to about several hundreds Pa, for example, the oxide film was continuously removed from the surface of the sealing material 32 by applying a voltage of 15 kV between the sealing material 32 and an electrodes 58 disposed in opposite thereto with a distance of about 15 mm to generate an electric discharge and by scanning the substrate 12. A process for removing the oxide film due to the electric discharge described above was carried out with respect to both of the sealing material 32 of the first substrate 11 and the sealing material 32 on the side wall 13.

A gap of 100 mm was provided between these first and second substrates, and then, was heated in vacuum of 5 × 10⁻⁶ Pa. When a temperature reached 250°C in the course of cooling, the first and second substrates were brought into intimate contact with each other to obtain alignment with the sealing material 32, so that the sealing material 32 became continuous on both of their faces. By carrying out cooling to coagulate the sealing material 32, in this state, a vacuum sealing portion 31 was formed, and then, the side wall 13 and the first substrate 11 were sealed with air tightness.

Thereafter, when vacuum sealing characteristics were evaluated via measurement pores provided in advance at corners of the substrate, a leak quantity indicated 1 × 10⁻¹² Pa·m³/sec or less, showing that a sufficient sealing effect was attained. In addition, from the viewpoints of both of the above measurement result and appearance as well, it was found that no crack occurred in a glass substrate caused by sealing using a metal sealing material.

As has been described above, according to the fourth embodiment and Examples, there can be provided a sealing material and a flat face type image display device using the sealing material that is capable of sealing a large-sized glass-based container that requires high vacuum, that is capable of maintaining a high degree of vacuum, and that has improved reliability. This sealing material does not form a brittle reaction layer on a boundary with a glass, and thus, can be used for bonding.

The present invention is not limited directly to the embodiment described above, and its components may be embodied in modified forms without departing from the spirit of the invention. Further, various inventions may be formed by suitably combining a plurality of components described in connection with the foregoing embodiment.

For example, the manufacturing method according to the fourth embodiment can be applied to any of the image display devices presented in the first to third embodiments. In the present invention, dimension, material and the like of a side wall, a support member, and other constituent elements are not limited to those in the embodiments described above, and can be properly selected as required. The present invention is not limited to use of a field emission type electron emission element or a surface conduction type electron emission element as an electron source. The invention can also be applied to an image display device using another electron source such as a carbon nano-tube and another plat face type image display device whose inside is maintained in vacuum.

### Industrial Applicability

According to the present invention, there can be provided a sealing material; a flat face type image display device using the sealing material that is capable of sealing a large-sized substrate that requires high vacuum, that is capable of maintaining a high degree of vacuum, and that has improved reliability; and a method for manufacturing the image display device.

## Claims

1. A sealing material for use in a vacuum sealing portion of an image display device, comprising at least one type of active metal in a base material that includes Su or at least one type of melting point lowering element of Pb, In, Bi, Zn, Ag, Au, or Cu in Sn.

2. The sealing material according to claim 1, wherein a total amount T of the active metal in the base metal is 0.001 wt% < T.

3. The sealing material according to claim 2, wherein a total amount T of the active metal in the base metal is 0.001 wt% < T.

4. The sealing material according to claim 1 or 2, wherein the active metal includes at least one of Ti, Zr, Hf, V, Ta, Y, Ce, and Mn.

5. A sealing material for use in a vacuum sealing portion of an image display device, wherein an alloy including Sn or at least one type of melting point lowering element in Sn contains at least one type of metal having an oxide generation standard free energy that is lower than that of Sn.

6. The sealing material according to claim 5, wherein the metal having an oxide generation standard free energy that is lower than that of Sn is at least one of Cr, Al, and Si, and an additive amount of the metal is in the range of 0.001 wt% to 2 wt%.

7. The sealing material according to claim 5 or 6, wherein the melting point lowering element includes at least one of Ag, Au, and Cu.

8. An image display device, comprising:
two substrates disposed in opposite to each other with a gap; and
a vacuum sealing portion which seals predetermined positions of the substrates and defines a sealed space between the two substrates,
the vacuum sealing portion having the sealing material according to any one of claims 1 to 3 filled along the predetermined position, and an oxide of an active metal is formed on a boundary between the sealing material and the substrate.

9. The image display device according to claim 8, wherein the vacuum sealing portion has the sealing material filled while imparting an ultrasonic wave.

10. The image display device according to claim 8, comprising: a phosphor layer provided on an inner face of one of the substrates; and a plurality of electron sources provided on an inner face of the other substrate and exciting the phosphor layer.

11. The image display device according to claim 8, wherein, on at least one surface among surfaces of the substrates filled with the sealing material, a layer including an inorganic compound or a metal layer whose surface is oxidized, is formed.

12. An image display device, comprising:
two glass substrates disposed in opposite to each other with a gap; and
a vacuum sealing portion which seals predetermined positions of the glass substrates and defines a sealed space between the two substrates,
the vacuum sealing portion including:
a sealing layer containing an active metal in Sn and filled along the predetermined position; and
a diffusion layer in which a component of the sealing layer is diffused at the glass substrate side of a boundary between the sealing layer and the glass substrate.

13. The image display device according to claim 12, wherein the component of the sealing layer diffused at the glass substrate side includes Sn and at least one active metal of Ti, Zr, Hf, V, Ta, Y, or Ce.

14. The image display device according to claim 12, wherein a thickness of the diffusion layer is in the range of 1 nm to 500 nm.

15. The image display device according to claim 12, wherein the content of the active metal in the sealing layer is less than 3 wt%.

16. An image display device, comprising:
two glass substrates disposed in opposite to each other with a gap; and
a vacuum sealing portion which seals predetermined positions of the substrates and defines a sealed space between the two glass substrates,
the vacuum sealing portion including:
a sealing layer containing an active metal in Sn and filled along the predetermined position; and
a component of the sealing layer segregates on a boundary between the sealing layer and the glass substrate.

17. The image display device according to claim 16, wherein an active metal segregates on the boundary.

18. The image display device according to claim 17, wherein a thickness of a portion at which the component of the sealing layer segregates is in the range of 1 nm to 500 nm.

19. The image display device according to claim 16, wherein an active metal segregates on the boundary, the content of which is in the range of 2 wt% to 30 wt%.

20. A flat face type image display device, **characterized by** comprising:
two substrates disposed in opposite to each other with a gap; and
a vacuum sealing portion which seals predetermined positions of the substrates and defines a sealed space between the two substrates,
the vacuum sealing portion containing at least one type of metal having an oxide generation standard free energy that is lower than that of Sn, in Sn or an alloy including at least one type of melting point lowering element in Sn.

21. The flat face type image display device according to claim 20, **characterized in that** the metal having an oxide generation standard free energy that is lower than that of the Sn is at least one of Cr, Al, and Si, and the content of the metal is in the range of 0.001 wt% to 2 wt%.

22. The flat face type image display device according to claim 20 or 21, wherein the melting point lowering element includes at least one of Ag, Au, and Cu.

23. A flat face type image display device, comprising:
two substrates disposed in opposite to each other with a gap; and
a vacuum sealing portion which seals predetermined positions of the substrates and defines a sealed space between the two substrates,
the vacuum sealing portion having the sealing material according to claim 20 filled along the predetermined position.

24. A flat face type image display device, comprising:
two substrates disposed in opposite to each other with a gap; and
a vacuum sealing portion which seals predetermined positions of the substrates and defines a sealed space between the two substrates,
the vacuum sealing portion having an undercoat formed on a sealing face along the predetermined position, and the undercoat contains at least one type of metal having an oxide generation standard free energy that is lower than that of Sn.

25. The flat face type image display device according to claim 24, wherein the undercoat formed on the sealing face is a burned matter of a mixture of metal or inorganic particles and a low melting glass, or alternatively, is a metal film formed in accordance with a process such as vapor deposition or sputtering.

26. The flat face type image display device according to any one of claims 20 to 25, further comprising: a phosphor layer provided on an inner face of one of the substrates; and a plurality of electron sources provided on an inner face of the other substrate and exciting the phosphor layer.

27. An image display device, comprising:
two glass substrates disposed in opposite to each other with a gap; and
a sealing portion which seals predetermined positions of the glass substrates and defines a sealed space between the two glass substrates,
the sealing portion including a sealing layer that contains at least one type of metal of Ag, Au, or Cu in Sn.

28. The image display device according to claim 27, wherein the sealing layer is formed of a sealing material that contains at least one type of metal of Ag, Au, or Cu in Sn.

29. The image display device according to claim 27, wherein the sealing layer is filled along the predetermined position of the glass substrate.

30. The image display device according to claim 29, wherein the sealing layer includes: an undercoat layer that contains at least one type of metal of Ag, Au, or Cu and is formed at the predetermined position; and a sealing material filled with Sn after being laminated on the undercoat layer.

31. The image display device according to claim 27, wherein the undercoat layer is a metal glass paste that contains at least one type of metal of Ag, Au, or Cu.

32. The image display device according to any one of claims 27 to 31, wherein the content of at least one type of the metal of Ag, Au, or Cu is in the range of 0.1% to 10%.

33. The image display device according to any one of claims 27 to 31, wherein the content of at least one type of the metal of Ag, Au, or Cu is in the range of 0.5% to 4%.

34. The image display device according to any one of claims 27 to 31, further comprising: a phosphor layer provided on an inner face of one of the substrates; and a plurality of electron sources provided on an inner face of the other substrate and exciting the phosphor layer.

35. A method for manufacturing an image display device which comprises two substrates disposed in opposite to each other with a gap; and a vacuum sealing portion which seals predetermined positions of the substrates and defines a sealed space between the two substrates, the method comprising:
filling the sealing material according to any one of claims 1 to 3 along a predetermined position of the substrate while imparting an ultrasonic wave thereto; and forming the sealing portion.

36. A method for manufacturing an image display device which comprises two substrates disposed in opposite to each other with a gap; and a vacuum sealing portion which seals predetermined positions of the substrates and defines a sealed space between the two substrates, the method comprising:
filling a sealing material along a predetermined position of at least one of the substrates;
removing an oxide from a surface of the sealing material while exposing a surface of the filled sealing material to a beam or an atmosphere with high energy; and
bonding the two substrates with each other by means of the sealing material from which the oxide has been removed to form the vacuum sealing portion.

37. The method for manufacturing an image display device according to claim 36, wherein the two substrates are bonded with each other after the oxide is removed from the sealing material surface in a vacuum atmosphere.

38. The method for manufacturing an image display device according to claim 36, wherein, in a vacuum atmosphere, the sealing material is irradiated with a laser beam, thereby removing an oxide from the sealing material surface.

39. The method for manufacturing an image display device according to claim 36, wherein, in a vacuum atmosphere, the sealing material is irradiated with plasma, thereby removing an oxide from the sealing material surface.

40. The method for manufacturing an image display device according to claim 36, wherein, in a vacuum atmosphere, a voltage is applied between the sealing material and an electrode disposed in opposite to the sealing material to generate an electric discharge and remove an oxide from the sealing material surface.

41. The method for manufacturing an image display device according to any one of claims 36 to 39, wherein, in a state in which a dummy substrate is opposed to the sealed material with a gap, an oxide is dissipated and removed from the sealing material surface and the dissipated oxide is adhered to and captured by the dummy substrate.

42. The method for manufacturing an image display device according to any one of claims 36 to 39, wherein, while an ultrasonic wave is imparted to the sealing material, the sealing material is filled along a predetermined position of at least one of the substrates, and a sealing portion is formed.

43. The method for manufacturing an image display device according to any one of claims 36 to 39, wherein the sealing material consists essentially of Sn, and at least one type of melting point lowering element including Ag, Cu, Bu, or Au is added thereto.

44. The method for manufacturing an image display device according to any one of claims 36 to 39, wherein the sealing material consists essentially of Sn, and at least one type of active metal including Ti, Cr, Zr, Hf, Al, or Ta is added thereto.

45. The method for manufacturing an image display device according to any one of claims 36 to 39, wherein the sealing material consists essentially of Sn, and at least one type of melting point lowering element including Ag, Cu, Bu, or Au and at least one type of active metal including Ti, Cr, Zr, Hf, Al, or Ta are added thereto.

46. An image display device manufactured by the method for manufacturing an image display device according to any one of claims 36 to 40, the device comprising: two substrates disposed in opposite to each other with a gap; and
a vacuum sealing portion which seals predetermined positions of the substrates and defines a sealed space between the two substrates.
